(19)

Europäisches Patentamt

European Patent Office

Office européen des brevets

(11)    **EP 2 085 578 A2**

(12)    **EUROPEAN PATENT APPLICATION**

(43) Date of publication:
05.08.2009 Bulletin 2009/32

(51) Int Cl.:
*F01D 25/04* (2006.01)     *F01D 25/16* (2006.01)

(21) Application number: **09250212.9**

(22) Date of filing: **27.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **01.02.2008 GB 0801845**

(71) Applicant: **Cummins Turbo Technologies Limited St. Andrews Road Huddersfield HD1 6RA (GB)**

(72) Inventors:
• **Jamil, Zahir Birkenhead Bradford BD11 2LT (GB)**
• **Allport, John Martin Barkisland Halifax, HX4 0DB (GB)**

(74) Representative: **Every, David Aidan et al Marks & Clerk LLP Sussex House 83-85 Mosley Street Manchester M2 3LG (GB)**

(54)    **Shaft bearing assembly**

(57)    A turbocharger shaft (8) is supported for rotation about its axis in a bearing housing (3) by a pair of floating ring bearings (11,12) disposed between the shaft and the bearing housing. The floating ring bearings are penetrated in a substantially radial direction by a plurality of apertures (16) to allow the passage of lubricating oil between inner and outer surfaces of the ring. The apertures are arranged at irregular angular intervals around the ring so as to prevent the generation of sub-synchronous vibrations that occur during rotation of the turbocharger shaft. This reduces turbocharger noise and increases life.

FIG 1

EP 2 085 578 A2

**Description**

The present invention relates to a shaft bearing assembly and more particularly, but not exclusively, to a shaft bearing assembly for suppressing vibrations in a turbomachinery shaft.

Turbochargers are well known devices for supplying air to the intake of an internal combustion engine at pressures above atmospheric (boost pressures). A conventional turbocharger essentially comprises an exhaust gas driven turbine wheel mounted on a rotatable shaft within a turbine housing. Rotation of the turbine wheel rotates a compressor wheel mounted on the other end of the shaft within a compressor housing. The compressor wheel delivers compressed air to the intake manifold of the engine, thereby increasing engine power.

The turbocharger shaft is supported for rotation by journal bearings in a bearing housing that is intermediate the compressor and turbine housings. In addition one or more thrust bearings may provide axial support. In automotive heavy-duty diesel engine applications turbocharger shafts are typically supported for rotation in the bearing housing by two separate fully floating ring bearings which are axially retained in position by circlips or some other conventional mechanical configuration. Such bearings are free to rotate so that whilst the shaft rotates relative to the bearing ring, the bearing ring rotates relative to the surrounding fixed housing. A supply of lubricant is delivered through passages in the bearing housing to the bearings so as to provide inner and outer hydrodynamic films of bearing lubricant between the shaft and an inner bearing surface of the bearing ring and between the an outer bearing surface bearing ring and the housing respectively. The lubricant passes from the outer bearing surface to the inner bearing surface through radial bores equi-angularly disposed around the bearing ring. In a fully floating ring bearing the bearing ring rotates at a rotational velocity less than that of the shaft. The inner film will rotate around the shaft at a speed that is approximately half the relative speed of rotation between the shaft and bearing ring whereas the outer film will rotate over the outer surface of the bearing ring at a rotational speed that is approximately half that of the bearing ring (since it rotates relative to a fixed surface of the housing).

In smaller turbochargers for passenger automobiles a single semi-floating bearing is generally used. Such a ring is fixed relative to the housing and therefore the oil film between the shaft and bearing rotates at approximately half the shaft speed.

Vibrations in a turbocharger shaft with floating bearings can take several forms. As well as synchronous vibrations (once per revolution of the shaft) that generally occur as a result of shaft or bearing imbalance, at turbocharger operating speeds the shaft and bearings often exhibit significant sub-synchronous vibrations (i.e. vibrations of a frequency less than the shaft rotation frequency) that propagate in a generally radial direction and lead to the generation of undesirable noise. One source of such vibrations is attributable to the phenomena known as "oil whirl" and "oil whip" which occur as a result of misalignment of the shaft with the bearing and instabilities in each oil film. In particular, as the shaft and bearing rotate an orbiting pressure wave is set up in each rotating film. The vibration caused by oil whirl has a frequency that is typically 10% to 20% of the shaft rpm whereas oil whip vibrations tend to increase in frequency with shaft speed up to a certain frequency at which they remain regardless of shaft speed. Both sources of vibration can result in an undesirable increase in turbocharger noise as a result of their transmission to the bearing housing. This can lead to reduced reliability and durability of the bearings as in such conditions they operate with reduced clearances. The sub-synchronous vibrations caused by oil whirl and whip result in the shaft axis describing a substantially cylindrical locus (each shaft end in phase) or one or more substantially conical loci (each end out of phase). Such vibrations are sometimes referred to in the art as rotor cylindrical lateral and conical modes.

Vibrations of the kind described above can also be caused or magnified by virtue of the circumferential flow of oil films and the associated pressure wave being "interrupted" by the radial bores.

It is an object of the present invention, amongst others, to obviate or mitigate the aforementioned disadvantage. It is also an object of the present invention to provide for an improved bearing arrangement.

According to a first aspect of the present invention there is provided a shaft bearing assembly comprising a bearing housing and a shaft at least partially disposed in the bearing housing and supported for rotation about an axis by at least one fully floating bearing disposed between the bearing housing and the shaft, the at least one fully floating bearing comprising a bearing ring penetrated by a plurality of substantially radial apertures, the apertures being arranged around the ring at irregular angular intervals.

The irregular spacing of the apertures arrangement reduces the tendency for the passage of a bearing lubricating fluid (such as oil) film over the apertures to induce resonant vibrations at sub-synchronous frequencies that generate noise in the bearing assembly. In this context the term "irregular" means that the apertures are not arranged around in the bearing ring at equi-angular intervals, although it will be understood that this does not discount the possibility of some of the apertures in the plurality apertures being spaced apart by the same angular distance.

A fully floating bearing is one that is free to rotate relative to the shaft. The apertures allow the passage of lubricating fluid, such as oil, to pass through the, or each, bearing ring. In operation, the fluid affords an outer fluid film between the bearing housing and the, or each ring, and an inner fluid film between the, or each, ring and the shaft.

The apertures may or not be aligned in a circumferential direction. There may be one or more groups of said plurality of apertures, the apertures in each group being circumferentially aligned and the groups being axially spaced.

The thickness of the, or each, bearing ring may be substantially constant.

At least one aperture of the plurality of apertures may have a cross-sectional area that is different to the cross-sectional area of the others of the plurality of apertures so as to achieve a mass balance around the ring. It will be appreciated that there may be two or more apertures but preferably at least three apertures.

The apertures may be substantially circular, the at least one aperture of the plurality of apertures having a diameter that is different to the diameter of the other apertures.

There may be provided at least a pair of fully floating bearings spaced apart along the shaft.

The bearing ring may have inner and outer surfaces, each of the substantially radial apertures extending between said inner and outer surfaces.

A hydraulic fluid supply passage preferably extends through the bearing housing to an outer surface of the bearing ring.

The at least one fully floating bearing is preferably mass balanced, that is to say its centre of mass is substantially coincident with the axis of rotation so that no unbalance forces are generated during rotation.

The shaft may be for turbomachinery such as, for example a turbocharger or a power turbine.

According to a second aspect of the present invention there is provided a turbocharger comprising an exhaust gas turbine connected to a compressor via a turbocharger shaft and a shaft bearing assembly as defined above, the shaft being the turbocharger shaft.

According to a third aspect of the present invention there is provided a method for designing a shaft bearing assembly comprising a bearing housing and a shaft at least partially disposed in the bearing housing and supported for rotation about an axis by at least one floating bearing disposed between the bearing housing and the shaft, the at least one floating bearing comprising a bearing ring penetrated by n substantially radial apertures, the method comprising positioning n-1 of the substantially radial apertures around the ring at irregular angular intervals and then calculating the cross sectional area and the angular position of the nth substantially radial aperture as a function of the cross-sectional area and angular position of each of the n-1 apertures.

This ensures that the bearing ring is mass balanced.

A specific embodiment of the present invention will now be described, by way of example only, with reference to the accompanying drawings, in which:

Figure 1 is an axial sectioned view of a turbocharger including a bearing housing fitted with a bearing assembly in accordance with the present invention;

Figure 2 is a sectioned end view through a floating bearing ring of the bearing assembly of figure 1; and

Figure 3 is a sectioned view of the bearing of figure 2, taken along line A-A;

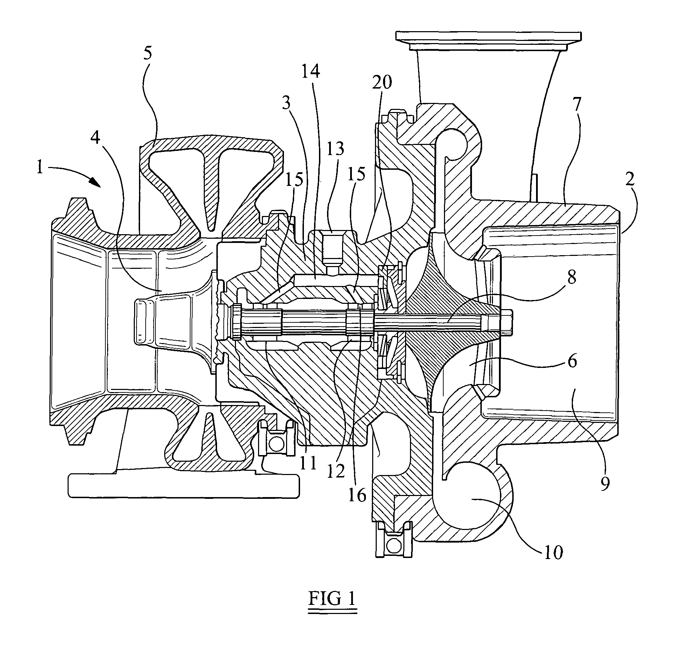

Referring to figure 1, the illustrated turbocharger comprises an exhaust gas turbine 1 joined to a compressor 2 via a central bearing housing 3. The turbine 1 comprises a turbine wheel 4 rotating within a turbine housing 5. Similarly, the compressor 2 comprises a compressor impeller 6 that rotates within a compressor housing 7. The turbine wheel 4 and compressor impeller 6 are mounted on opposite ends of a common turbocharger shaft 8 that extends through the central bearing housing 3.

In use, the turbine wheel 4 is rotated by the passage of exhaust gas passing over it from the internal combustion engine. This in turn rotates the compressor impeller 6 that draws intake air through a compressor inlet 9 and delivers boost air to the inlet manifold (not shown) of an internal combustion engine via an outlet volute 10.

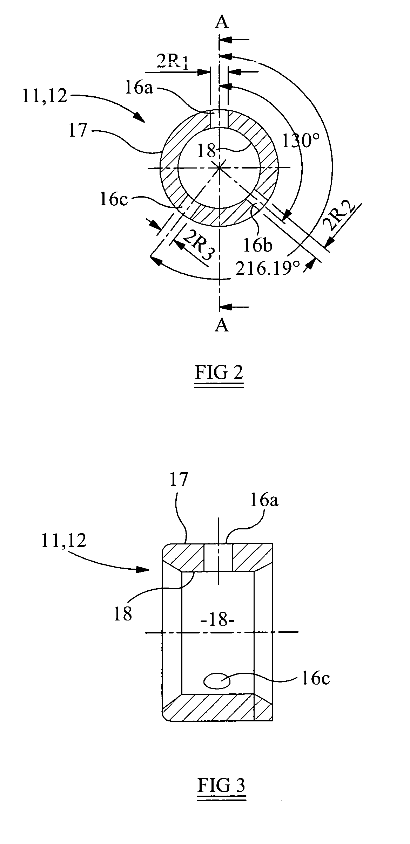

The turbocharger shaft 8 rotates in fully floating journal bearing rings 11 and 12 housed towards the turbine end and compressor end respectively of the bearing housing 3. Oil is fed to the bearings under pressure from the oil system of the engine via an oil inlet 13, gallery 14 and passages 15. Each of the bearings rings 11, 12 is retained in place axially by retaining rings such as, for example, circlips and is penetrated by circumferentially spaced radial holes 16 that allow oil to pass to the turbocharger shaft 8. The holes 16 are axially aligned and extend between an outer and inner surface 17, 18 of each ring (see figures 2 and 3).

A thrust bearing assembly 20 (figure 1 only) flanks the journal bearing 12 at the compressor end.

The radial holes 16 are disposed around the bearing ring 11, 12 at irregular intervals, that is the angular spacing between adjacent holes is not consistent around the bearing ring. In the exemplary embodiment shown in figure 2 it can be seen that there are three circular holes 16a, 16b, 16c. A first hole 16a is disposed at 12 o'clock in the orientation shown in figure 2 and, moving around the ring in the clockwise direction, the second hole 16b is disposed at an angle of 130° to the first 16a, whilst the third 16c is disposed at an angle of 86.19° to the second hole 16b (216.19° to the first hole 16a in the clockwise direction, 143.1° in the anti-clockwise direction). It will be appreciated that the exact angular spacing is simply an example and may be varied. The angles are measured between the centrelines of each hole as illustrated in figure 2.

Oil is supplied to the outer surface 17 of each bearing ring 11, 12 where an outer oil film is developed between it and an adjacent surface of the bearing housing 3. The oil also passes through the radial holes 16 to supply an inner film between inner surface 18 and shaft 8.

It is desirable for the size (diameter) of the irregularly spaced holes 16a-c to vary around the bearing rings 11, 12 so as to ensure there is a correct mass balance for satisfactory operation. Since the thickness of the bearing ring is constant, the mass of the ring is balanced in the design phase by careful selection of the size of each hole.

In design practice the final hole can be seen as a "balancing" hole, that is its size and position is determined by the size and position of the other holes in the ring.

Assuming the bearing is to have "n" holes, the final nth hole position and radius can be calculated from:

$$R_n = \sqrt{\left(\frac{A_n}{\pi}\right)}$$

where R is the radius of the hole and A is the hole area which is calculated from:

$$A_n = \sqrt{\left(A_{n,V}^2 + A_{n,H}^2\right)}$$

where $A_{n,V}$ and $A_{n,H}$ are the vertical and horizontal components of the area of a given hole which are dependent on the angular position of the hole disposed around the bearing ring and are found from:

$$A_{n,V} = A_1 \cos(\theta_1) + A_2 \cos(\theta_2) + ... A_{n-1} \cos(\theta_{n-1})$$

$$A_{n,H} = A_1 \sin(\theta_1) + A_2 \sin(\theta_2) + ... A_{n-1} \sin(\theta_{n-1})$$

where $\theta$ is the angle of the particular hole relative to a datum position which may be the vertical (12 o' clock) position as occupied, for example, by the first hole 16a in figure 2.

From this, the angular position of the final balancing hole around the ring can be calculated as:

$$\theta_n = a\tan\left(\frac{A_{nH}}{A_{nV}}\right)$$

Applying the above equations to the bearing ring of figures 2 and 3 which has three holes 16a, b, c in which the first hole 16a has a radius $R_1$ = 2.6mm and which occupies the datum (vertical) position ($\theta_1$ =0 degrees) and the second hole has a radius $R_2$ = 2.0mm and is at $\theta_2$ =130 degrees to the datum position, the area of the third hole can be calculated as:

$$A_{3,V} = A_1 \cos(\theta_1) + A_2 \cos(\theta_2) = \pi\left(2.6^2 + 2^2 \cos(130)\right) = 13.1596$$

$$A_{3,H} = A_1 \sin(\theta_1) + A_2 \sin(\theta_2) = \pi\left(2^2 \sin(130)\right) = 9.626$$

$$A_3 = \sqrt{A_{3,V}{}^2 + A_{3,H}{}^2} = 16.305$$

and the angular position relative to the datum as:

$$\theta_3 = a\tan\left(\frac{A_{3H}}{A_{3V}}\right) = 216.19\,\deg rees$$

$$R_3 = \sqrt{\left(\frac{A_3}{\pi}\right)} = 2.278mm$$

These equations are an approximation based on the assumption that the bearing ring is defined by a wall of substantially constant thickness. The example given has been tested and found to be satisfactory, although it certain circumstances a further balancing iteration may be performed for improved performance.

It will be understood that the holes need not be perfectly circular and need not be perfectly radial.

The configuration of the holes in this manner prevents the fluid films from resonating as a result of the hole pass frequency whilst still allow lubricating oil to flow effectively from the outer surface to the inner film and without impairing the load-carrying capacity of the bearing arrangement. It provides for a relatively low cost solution to suppressing sub-synchronous vibration that is easily implemented. The reduction in vibration serves to increase the life of the turbocharger.

The arrangement may result in the number of radial bearing holes being reduced which can reduce the pumping of the oil between the films.

The device is suitable for application to a normal heavy-duty diesel engine turbochargers but the principle may be extended to any other rotating shaft assembly.

It is to be appreciated that numerous modifications to the above-described embodiments may be made without departing from the scope of the invention as defined in the appended claims. For example, it will be understood that the precise shape, configuration and positioning of the components that make up the bearing assembly may vary. Moreover, the precise number and location of the fully floating bearing rings for a shaft may vary depending on the application. In certain applications it may only be necessary to have a single bearing ring which may be located at any convenient axial position along the shaft and may be of any suitable axial length. The axial position of the holes along any of the bearing rings may be varied along the length of the bearing rings.

While the invention has been illustrated and described in detail in the drawings and foregoing description, the same is to be considered as illustrative and not restrictive in character, it being understood that only the preferred embodiments have been shown and described and that all changes and modifications that come within the scope of the inventions as defined in the claims are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1.   A shaft bearing assembly comprising a bearing housing and a shaft at least partially disposed in the bearing housing and supported for rotation about an axis by at least one fully floating bearing disposed between the bearing housing and the shaft, the at least one fully floating bearing comprising a bearing ring penetrated by a plurality of substantially radial apertures, the apertures being arranged around the ring at irregular angular intervals.

2. A shaft bearing assembly according to claim 1, wherein at least one aperture of the plurality of apertures has a cross-sectional area that is different to the cross-sectional area of the others of the plurality of apertures.

3. A shaft bearing assembly according to claim 2, wherein the apertures are substantially circular, the at least one aperture of the plurality of apertures having a diameter that is different to the diameter of the other aperture or apertures.

4. A shaft bearing assembly according to any preceding claim, wherein there is provided at least a pair of fully floating bearings spaced apart along the shaft.

5. A shaft bearing assembly according to any preceding claim, the at least one fully floating bearing comprising inner and outer surfaces, each of the substantially radial apertures extending between said inner and outer surfaces.

6. A shaft bearing assembly according to claim 5, further comprising a hydraulic fluid supply passage extending through the bearing housing to an outer surface of the at least one bearing.

7. A shaft bearing assembly according to any preceding claim where the at least one bearing is mass balanced.

8. A turbocharger comprising an exhaust gas turbine connected to a compressor via a turbocharger shaft and a shaft bearing assembly according to any preceding claim, the shaft being the turbocharger shaft.

9. A method for designing a shaft bearing assembly comprising a bearing housing and a shaft at least partially disposed in the bearing housing and supported for rotation about an axis by at least one floating bearing disposed between the bearing housing and the shaft, the at least one floating bearing comprising a bearing ring penetrated by n substantially radial apertures, the method comprising positioning n-1 of the substantially radial apertures around the ring at irregular angular intervals and then calculating the cross sectional area and the angular position of the nth substantially radial aperture as a function of the cross-sectional area and angular position of each of the n-1 apertures.

10. A method for manufacturing a shaft bearing assembly comprising a first step of designing a shaft bearing assembly in accordance with claim 9 and then forming said radial apertures in said bearing ring in accordance with the calculation.

FIG 1

FIG 2

FIG 3